# EUROPEAN PATENT APPLICATION

(11) **EP 4 391 484 A1**
(43) Date of publication of application: **26.06.2024**
(21) Application number: 22214913.0
(22) Date of filing: 20.12.2022
(51) Int. Cl.: H04L 47/25, H04L 47/38, H04L 47/74, H04L 47/762, H04L 47/22, H04L 47/2416, H04L 47/35, H04L 47/36

(54) **EFFICIENT SUPPORT FOR A DISTRIBUTED REAL-TIME APPLICATION**

(71) Applicant: Deutsche Telekom AG, 53113 Bonn (DE)
(72) Inventor: BAYER, Nico, 61231 Bad Nauheim (DE); SCHNIEDERS, Dominik, 52078 Aachen (DE)
(74) Representative: RDL Patentanwälte PartG mbB

(57) **Abstract**

A method for operating a communication network, wherein a communication network provides a sender of a distributed real-time application and a receiver of the distributed real-time application with a communication connection, the distributed real-time application defining a minimum operable data rate, and the sender periodically transmits data packets to the receiver via the provided communication connection at a data rate higher than the defined minimum operable data rate, and computer program products.

## Description

The invention relates to a method for operating a communication network, wherein a communication network provides a sender and a receiver of a distributed real-time application with a communication connection, the distributed real-time application defining a minimum operable data rate, and the sender of the distributed real-time application periodically transmits data packets to the receiver of the distributed real-time application via the provided communication connection at a data rate higher than the defined minimum operable data rate. The invention further relates to computer program products.

The distributed real-time application may also be referred to as a near-real-time-application, a time-critical application or a latency-critical application. The distributed real-time application usually comprises an application frontend and an application backend. The application frontend and the application backend may be executed by a first computing device and a second computing device, respectively, the second computing device being different and separate from the first computing device.

The application frontend and the application backend are configured for transmitting application data via the communication network. The application data usually comprises a plurality of periodically transmitted data packets. The data packets may be transmitted by the application frontend (uplink) or by the application backend (downlink). Accordingly, each of the application frontend and the application backend may be either a sender of the distributed real-time application or a receiver of the distributed real-time application.

The first and second computing devices may be connected via the communication connection provided by the communication network. The communication network, i.e., a node of the communication network dynamically allocates network resources to the communication connection. The allocated network resources depend on a current load of the communication network and a current condition of the communication connection.

The minimum operable data rate is a lowest data rate required for a proper operation of the distributed real-time application. Data rates below the minimum operable data rate result in a malfunction or even in an abort of the distributed real-time application.

In practical cases, the communication network simultaneously supports a plurality of distributed applications, i.e. provides a plurality of parallel communication connections to the plurality of distributed applications. As an available amount of network resources is limited, the parallel communication connections necessarily share the available network resources.

The communication network, hence, has to fairly distribute the available network resources among the parallel communication connections. Some distributed applications may be real-time applications and some may be not. However, the communication network generally does not know which distributed application defines a minimum operable data rate and which does not. Thus, an operation of a distributed real-time application may be readily impaired by a communication connection not allowing the minimum operable data rate.

It is, therefore, an object of the invention to suggest a method for operating a communication network which allows for reliably supporting a distributed real-time application. Further objects of the invention are to provide computer program products.

An aspect of the invention is a method for operating a communication network, wherein a communication network provides a sender of a distributed real-time application and a receiver of the distributed real-time application with a communication connection, the distributed real-time application defining a minimum operable data rate, and the sender periodically transmits data packets to the receiver via the provided communication connection at a data rate higher than the defined minimum operable data rate. The sender and the receiver are connected via the provided communication connection. The provided communication connection currently allows a data rate above the minimum operable data rate defined by the distributed real-time application.

According to the invention, the sender steadily determines a currently available bitrate of the communication connection and adjusts the data rate to the determined currently available bitrate, a node of the communication network steadily learns a distance of the data rate from the minimum operable data rate and prevents the currently available bitrate from lowering when the learned distance is smaller than a predetermined threshold distance. The currently available bitrate of the communication connection depends on the network resources allocated to the communication connection and a condition of the communication connection. The distributed real-time application dynamically changes the data rate dependent on the determined currently available bitrate in order to exploit the currently available bitrate.

The node of the communication network may comprise a scheduler of the communication network. Steadily learning the distance means knowing the current distance, i.e. a current difference of the currently available bitrate from the minimum operable data rate, at any time. The predetermined threshold distance may be indicated as a percentage of the minimum operable data rate and provides a safety margin for precluding a lowering of the currently available bitrate below the minimum operable data rate.

The node may take any measure for effectively preventing the currently available bitrate from lowering below the minimum operable data rate. As a result, a proper operation of the distributed real-time application is ensured, i.e. the distributed real-time application is reliably supported by the communication network.

Preventing the currently available bitrate from lowering may comprise allocating additional network resources to the communication connection when the lowering is not caused by the communication network. For instance, a condition of the communication connection may temporarily deteriorate requiring additional network resources for maintaining the currently available bitrate constant during the temporary deterioration. The additional network resources may be temporarily transferred from parallel communication connections.

Preventing the current bitrate from lowering may also comprise stopping removing network resources from the communication connection when the lowering is caused by the communication network. For instance, an intentional transfer of network resources of the communication connection to parallel communication connections may be stopped or even at least partially reversed.

In an embodiment, learning the distance comprises querying the distance from the distributed real-time application via an application programming interface (API) of the distributed real-time application. The application programming interface configures the distributed real-time application to receive a query from the communication network, i.e. the node, and to send an answer to the communication network, i.e. the node. The node may steadily query the distance.

In an alternative embodiment, learning the distance comprises continuously reading markers of IP packets corresponding to the transmitted data packets. The sender may cause an operating system via a middleware to mark the IP packets before a transmission.

The sender may provide a percentage of the transmitted IP packets with a binary marker, the percentage indicating the distance. The IP packets to be marked are selected statistically. An ECN (Explicit Congestion Notification) bit of an IP header of an IP packet may be used as the binary marker. For instance, marking 90% of the IP packets may indicate the currently available bitrate to be close to the minimum operable data rate while marking 10% of the IP packets may indicate the currently available bitrate to be far from the minimum operable data rate.

The sender may alternatively provide each IP packet with a marker value, the marker value indicating the distance. A single DSCP (Differential Services Code Point) bit of an IP header of the IP packet or a plurality of DSCP bits may be used as the marker value. The marker value may be a 1-bit flag indicating a zero distance, i.e. indicating that the currently available bitrate equals the minimum operable data rate or the predetermined threshold data rate. The marker value may be a percentage value indicating the distance when the plurality of DSCP bits are used.

A second byte of the IP header is a so-called Type of Service (ToS) field which comprises a 6-bit DSCP portion and a 2-bit ECN portion.

Preferably, adjusting the data rate comprises reducing the data rate when the determined currently available bitrate reduces and increasing the data rate when the determined currently available bitrate increases. In other words, the sender dynamically follows the currently available bitrate.

Reducing the data rate may comprise reducing a frequency and/or a size of the data packets and increasing the data rate may comprise increasing the frequency and/or the size of the data packets. The frequency indicates a number of data packets transmitted during a time interval, e.g. one second. The size indicates a number of bits of a data packet.

In a preferred embodiment, the sender transmits video frames as the data packets wherein a frame rate and/or a resolution of the video frames is reduced for reducing the data rate or increased for increasing the data rate. Each video frame corresponds to a single image of the video. The video frames may comprise i-frames which comprise a complete single image of the video and p-frames which depend on a preceding i-frame or a preceding p-frame and define a single image of the video together with the preceding i-frame or the preceding p-frames.

Preferably, a cellular network as the communication network provides the communication connection as a wireless connection, a mobile device as a terminal device executes an application frontend of the distributed real-time application as one of the sender and the receiver and an edge cloud server as an application server executes an application backend of the distributed real-time application as the other one of the sender and the receiver. A base transceiver station (BTS) of the cellular network provides the mobile device, e.g., a smartphone, a table, a notepad, a vehicle and the like, with a wireless radio connection.

Determining the currently available bitrate may comprise repeatedly, temporarily and gradually increasing the data rate on a trial basis and letting the determined currently available bitrate be a data rate where a measured latency or a volatility of the measured latency of the communication connection increases. The latency is a packet delay caused by the communication network. The volatility of the latency is usually referred to as a jitter. Particularly, the IP packets may be delayed when passing through a queue provided by a node of the communication network.

Another aspect of the invention is a computer program product, comprising a storage medium with a program code. The storage medium may be configured as a CD (Compact Disc), a DVD (Digital Versatile Disk), a USB (Universal Serial Bus) stick, a hard drive, a RAM (Random Access Memory) chip, a cloud storage and the like.

According to the invention, the program code causes a computing device to carry out a method according to an embodiment of the invention as a node of a communication network in cooperation with a distributed real-time application when being executed by a processor of the computing device. Shortly, the program code configures the node for steadily learning the distance of the data rate of the distributed real-time application from the minimum operable data rate of the distributed real-time application.

A third aspect of the invention is a computer program product, comprising a storage medium with a program code.

According to the invention, the program code causes a computing device to carry out a method according to an embodiment of the invention as a sender or a receiver of a distributed real-time application in cooperation with a node of a communication network when being executed by a processor of the computing device. Shortly, the program code configures the sender or the receiver of the distributed application for signaling a distance of the data rate from the minimum operable data rate by marking transmitted IP packets.

An essential advantage of the inventive method for operating a node of a cellular network is that the method allows for reliably supporting a distributed real-time application. Due to the reliable support a fair sharing of limited available network resources among a plurality of applications is enabled.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

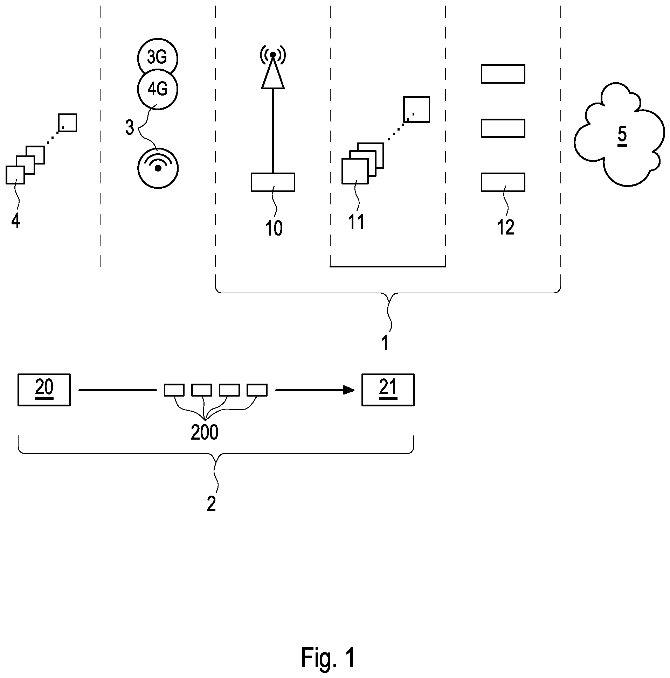

- Fig. 1: schematically shows an entity diagram of a communication network being operated in a method according to an embodiment of the invention.

Fig. 1 schematically shows an entity diagram of a communication network 1. The communication network 1 comprises a node 10. The node 10 may be implemented by means of a computer program product. The computer program product comprises a storage medium with a program code. The program code causes a computing device to carry out a method according to the invention described below as the node 10 of the communication network 1 in cooperation with a distributed real-time application 2 (see below) when being executed by a processor of the computing device.

The communication network 1 may further comprise an application server 11 and a backbone 12. The communication network 1 may be connected to an internet 5. The communication network 1 is configured for providing a terminal device 4 with a communication connection 3. For instance, a cellular network as the communication network 1 provides the communication connection 3 as a wireless connection.

The terminal device 4 and the application server 11 may be configured for executing a distributed real-time application 2. For instance, a mobile device as the terminal device 4 executes an application frontend of the distributed real-time application 2 as one of a sender 20 of the distributed real-time application 2 and a receiver 21 of the distributed real-time application 2. The distributed real-time application 2 defines a minimum operable data rate.

The sender 20 or the receiver 21 of the distributed real-time application 2 may be implemented by means of a computer program product. The computer program product comprises a storage medium with a program code. The program code causes a computing device to carry out a method according to the invention described below as the sender 20 or the receiver 21 of the distributed real-time application 2 in cooperation with the node 10 of the communication network 1 when being executed by a processor of the computing device.

An edge cloud server as the application server 11 may execute an application backend of the distributed real-time application as the other one of the sender 20 and the receiver 21.

The communication network 1 is operated in a method according to an embodiment of the invention.

The communication network 1 provides the sender 20 of the distributed real-time application 2 and the receiver 21 of the distributed real-time application 2 with a communication connection 3. A cellular network as the communication network 1 may provide the communication connection 3 as a wireless connection. A mobile device as a terminal device 4 may execute the application frontend as one of the sender 20 and the receiver 21. An edge cloud server as an application server 5 may execute the application backend as the other one of the sender 20 and the receiver 21.

The sender 20 periodically transmits data packets 200 to the receiver 21 via the provided communication connection 3 at a data rate higher than the defined minimum operable data rate. The sender 20 may transmit video frames as the data packets 200.

The sender 20 steadily determines a currently available bitrate of the communication connection 3. Determining the currently available bitrate may comprise repeatedly, temporarily and gradually increasing the data rate on a trial basis and letting the determined currently available bitrate be a data rate where a measured latency or a volatility of the measured latency of the communication connection 3 increases.

The sender 20 steadily adjusts the data rate to the determined currently available bitrate. Adjusting the data rate may comprise reducing the data rate when the determined currently available bitrate reduces and increasing the data rate when the determined currently available bitrate increases. Reducing the data rate preferably comprises reducing a frequency and/or a size of the data packets 200 and increasing the data rate preferably comprises increasing the frequency and/or the size of the data packets 200. Particularly, a frame rate and/or a resolution of video frames may be reduced for reducing the data rate or increased for increasing the data rate.

The node 10 of the communication network 1 steadily learns a distance of the data rate from the minimum operable data rate. Learning the distance may comprise querying the distance from the distributed real-time application 2 via an application programming interface (API) of the distributed real-time application 2. Learning the distance may also comprise continuously reading markers of IP packets corresponding to the transmitted data packets 200.

For instance, the sender 20 provides a percentage of the transmitted IP packets with a binary marker, the percentage indicating the distance. Alternatively, the sender 20 may provide each IP packet with a marker value, the marker value indicating the distance.

The node 10 prevents the currently available bitrate from lowering when the learned distance is smaller than a predetermined threshold distance. Preventing the currently available bitrate from lowering may comprise allocating additional network resources to the communication connection 3 when the lowering is not caused by the communication network 1. Preventing the current bitrate from lowering may also comprise stopping removing network resources from the communication connection 3 when the lowering is caused by the communication network 1.

### Reference numerals

- 1: communication network
- 10: node
- 11: application server
- 12: backbone
- 2: distributed real-time application
- 20: sender
- 200: data packet
- 21: receiver
- 3: communication connection
- 4: terminal device
- 5: internet

## Claims

1. A method for operating a communication network (1), wherein
- a communication network (1) provides a sender (20) of a distributed real-time application (2) and a receiver (21) of the distributed real-time application (2) with a communication connection (3), the distributed real-time application (2) defining a minimum operable data rate;
- the sender (20) periodically transmits data packets (200) to the receiver (21) via the provided communication connection (3) at a data rate higher than the defined minimum operable data rate;
- the sender (20) steadily determines a currently available bitrate of the communication connection (3) and adjusts the data rate to the determined currently available bitrate;
- a node (10) of the communication network (1) steadily learns a distance of the data rate from the minimum operable data rate;
- the node (10) prevents the currently available bitrate from lowering when the learned distance is smaller than a predetermined threshold distance.

2. The method according to claim 1, wherein preventing the currently available bitrate from lowering comprises allocating additional network resources to the communication connection (3) when the lowering is not caused by the communication network (1).

3. The method according to claim 1 or 2, wherein preventing the current bitrate from lowering comprises stopping removing network resources from the communication connection (3) when the lowering is caused by the communication network (1).

4. The method according to one of claims 1 to 3, wherein learning the distance comprises querying the distance from the distributed real-time application (2) via an application programming interface of the distributed real-time application (2).

5. The method according to one of claims 1 to 4, wherein learning the distance comprises continuously reading markers of IP packets corresponding to the transmitted data packets (200).

6. The method according to claim 5, wherein the sender (20) provides a percentage of the transmitted IP packets with a binary marker, the percentage indicating the distance.

7. The method according to claim 5, wherein the sender (20) provides each IP packet with a marker value, the marker value indicating the distance.

8. The method according to one of claims 1 to 7, wherein adjusting the data rate comprises reducing the data rate when the determined currently available bitrate reduces and increasing the data rate when the determined currently available bitrate increases.

9. The method according to claim 8, wherein reducing the data rate comprises reducing a frequency and/or a size of the data packets (200) and increasing the data rate comprises increasing the frequency and/or the size of the data packets (200).

10. The method according to one of claims 1 to 9, wherein the sender (20) transmits video frames as the data packets (200) wherein a frame rate and/or a resolution of the video frames is reduced for reducing the data rate or increased for increasing the data rate.

11. The method according to one of claims 1 to 10, wherein a cellular network as the communication network (1) provides the communication connection (3) as a wireless connection, a mobile device as a terminal device (4) executes an application frontend of the distributed real-time application (2) as one of the sender (20) and the receiver (21) and an edge cloud server as an application server (11) executes an application backend of the distributed real-time application (2) as the other one of the sender (20) and the receiver (21).

12. The method according to one of claims 1 to 11, wherein determining the currently available bitrate comprises repeatedly, temporarily and gradually increasing the data rate on a trial basis and letting the determined currently available bitrate be a data rate where a measured latency or a volatility of the measured latency of the communication connection (3) increases.

13. A computer program product, comprising a storage medium with a program code, the program code causing a computing device to carry out a method according to one of the preceding claims as a node (10) of a communication network (1) in cooperation with a distributed real-time application (2) when being executed by a processor of the computing device.

14. A computer program product, comprising a storage medium with a program code, the program code causing a computing device to carry out a method according to one of the preceding claims as a sender (20) or a receiver (21) of a distributed real-time application (2) in cooperation with a node (10) of a communication network (1) when being executed by a processor of the computing device.
